(19) Europäisches Patentamt
European Patent Office
Office européen des brevets

(11) EP 3 738 166 B1

(12) EUROPEAN PATENT SPECIFICATION

(45) Date of publication and mention of the grant of the patent:
**16.02.2022 Bulletin 2022/07**

(21) Application number: **19701034.1**

(22) Date of filing: **09.01.2019**

(51) International Patent Classification (IPC):
***H01M 10/052*** *(2010.01)* ***H01M 10/0525*** *(2010.01)*
***H01M 10/054*** *(2010.01)* ***H01M 10/0565*** *(2010.01)*
***H01M 10/0568*** *(2010.01)* ***H01M 10/0569*** *(2010.01)*

(52) Cooperative Patent Classification (CPC):
**H01M 10/052; H01M 10/0525; H01M 10/054; H01M 10/0565; H01M 10/0568; H01M 10/0569;**
H01M 2300/0048; H01M 2300/0082; Y02E 60/10

(86) International application number:
**PCT/EP2019/050453**

(87) International publication number:
**WO 2019/137960 (18.07.2019 Gazette 2019/29)**

# (54) ALKALI METAL SALTS WITH LIPOPHILIC ANIONS FOR ALKALI BATTERIES

ALKALIMETALLSALZE MIT LIPOPHILEN ANIONEN FÜR ALKALIBATTERIEN

SELS DE METAUX ALCALINS AVEC ANIONS LIPOPHILES POUR BATTERIES ALCALINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.01.2018 EP 18382009**

(43) Date of publication of application:
**18.11.2020 Bulletin 2020/47**

(73) Proprietor: **Fundación Centro de Investigación Cooperativa de Energías Alternativas, CIC Energigune Fundazioa**
**01510 Vitoria-Gasteiz, Alava (ES)**

(72) Inventors:
- **ZHANG, Heng**
  **01510 Vitoria-Gasteiz, Álava (ES)**
- **ARMAND, Michel**
  **75014 Paris (FR)**
- **LI, Chunmei**
  **01510 Vitoria-Gasteiz, Álava (ES)**
- **RODRÍGUEZ MARTÍNEZ, Lide Mercedes**
  **01510 Vitoria-Gasteiz, Álava (ES)**

(74) Representative: **ABG Intellectual Property Law, S.L.**
**Avenida de Burgos, 16D**
**Edificio Euromor**
**28036 Madrid (ES)**

(56) References cited:
**US-A1- 2010 273 063**

- **HENG ZHANG ET AL: "Lithium bis(fluorosulfonyl)imide/poly(ethylene oxide) polymer electrolyte", ELECTROCHIMICA ACTA., vol. 133, 24 April 2014 (2014-04-24), pages 529-538, XP055482433, GB ISSN: 0013-4686, DOI: 10.1016/j.electacta.2014.04.099**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 738 166 B1

## Description

### FIELD OF THE INVENTION

The present invention relates to the field of alkali metal batteries and more particularly to conductive materials suitable as electrolytes to be contained therein.

### BACKGROUND

Energy storage and conversion devices are attracting a considerable interest as they are very promising systems to enable the penetration of intermittent renewable energy generation sources and decrease the dependence of conventional and non-renewable power sources.

Among the myriad of energy-storage technologies, metal batteries, and more particularly lithium batteries, play an important role due to their high specific energy (energy per unit weight) and energy density (energy per unit volume).

The design of metal batteries requires of an appropriate combination of active electrode materials and electrolyte composition. In today's commercial Li-ion batteries, a liquid solution of lithium hexafluorophosphate ($LiPF_6$) dissolved in a mixture of cyclic and linear organic carbonates, such as ethylene carbonate (EC), dimethyl carbonate (DMC) and ethyl methyl carbonate (EMC) is used as the electrolyte. On the other hand, lithium metal has been intensively investigated as an anode for rechargeable lithium metal batteries. However, the use of lithium metal in contact with a liquid electrolyte unfortunately leads to safety problems associated with the formation of irregular metallic lithium electrodeposits during the recharge which finally causes Li dendrite formation responsible for explosion hazards.

During the last decades, several promising Li-ion conducting solid electrolytes have been suggested, owing to their capability to increase the safety and energy density of lithium batteries. Generally, solid electrolytes can be sorted into two classes: inorganic ceramic electrolytes and organic solid polymer electrolytes (also known as SPEs). Solid polymer electrolytes are widely studied systems for application in alkali metal and alkali metal-ion technology. In fact, polymer materials are great candidates in terms of safety, processing, simplicity and cost.

Lithium salts in combination with a polar polymer matrix without organic solvents were used previously in order to solve most of the safety issues encountered with liquid electrolytes. These solid electrolytes are considered as dual-ion conductors in which both $Li^+$ cations and its counter anions are mobile.

In this sense, the most widely studied and used dual-ion conducting system is the bis(trifluoromethane sulphonyl)imide lithium salt ($LiN(SO_2CF_3)_2$ or LiTFSI), dissolved in an aprotic polymer matrix of polyethylene oxide (PEO). PEO contains ether coordination sites that enable the dissociation of salts, together with a flexible macromolecular structure that assists ionic transport.

However, the development of these SPEs has been mainly hampered by two issues: the inability to design a SPE that has both ionic conductivity and good mechanical properties and the fact that the motion of lithium ions carries only a small fraction ($1/5^{th}$) of the overall ionic current, which leads during battery operation to the formation of a strong concentration gradient with deleterious effects such as favorable dendritic growth and limited power delivery. In fact, the Li-ion transference number (LTN) of these dual-ion conducting SPEs is generally lower than 0.4. For example, the electrolyte of bis(fluoromethane sulphonyl)imide lithium salt ($LiN(SO_2F)_2$ or LiFSI) and PEO was found to have a slightly higher ionic conductivity than LiTFSI/PEO electrolyte, but it still possesses a low Li-ion transference number of ca. 0.2 [Electrochemica Acta, 2014, 133, 529-538].

Furthermore, the presence of PEO crystalline regions interferes with ion transport, which requires an amorphous phase. This affects the ionic conductivity at temperatures below the melting temperature. Above said melting temperature, the ionic conductivity strongly increases but PEO becomes a viscous liquid and losses its dimensional stability.

Thus, the search of electrolyte compositions having a highly cation conductivity as well as mechanical properties is desired for battery community. Particularly important is the absence of detrimental effect of anion polarization and low dendrite growth rate [Electrochimica Acta, 1995, 40, 2191; Energy & Environmental Science, 2014, 7, 513-537]. To date, important attention has been paid to prepare polymer salts which have anions covalently bonded to polymer, inorganic backbone, or immobilized by anion acceptors.

Bouchet R. et al [Nature Materials, 2013, 12, 452] describes a single-ion polymer electrolyte based on self-assembled polyanionic BAB triblock copolymers to finely tune mechanical properties, as well as ionic conductivity and lithium transport number at the same time. The B block is a polyelectrolyte based on poly(styrene trifluoromethanesulfonylimide of lithium) which is associated with a central A block based on linear poly(ethylene oxide). Thus, the lithium salt is associated covalently to the polar polymer in each styrene monomeric unit forming a single-ion solid polymer electrolyte.

Zhang, H. et al. [Chem. Soc. Rev., 2017, 46, 797-815] also discloses, among other strategies to immobilize anions, the polymerization of monomers (styrene, (meth)acrylates of oligo-alkylene oxides) having attached different anions such as sulfonate or sulfonylimide.

Document US 5,548,055 relates to the use of polymer electrolytes wherein the counter anion of the lithium salt is covalently attached to each of the monomeric unis constituting a siloxane polymer backbone or to one of the monomeric units of the copolymer backbone.

However, the strategy to immobilize anions by covalently bonding to a polymer backbone involves complicated polymerization technique and arduous anions grafting steps.

On the other hand, the widely used liquid electrolytes $LiPF_6$ in mixture of carbonate ester solvent suffer also from a low transference number of lithium cation of @ 0.3, limiting the areal capacity of the electrodes to @ 2 mAh $cm^{-2}$.. Higher specific energies could be obtained if the areal capacity could be increased.

In view of that, there is still a need to develop electrolyte compositions for lithium secondary batteries and other energy storage devices with improved safety properties and ionic conductivities. Therefore, breakthroughs in new effective method to achieve high cation transference number are highly desirable.

## BRIEF DESCRIPTION OF THE INVENTION

The authors of the present invention have developed a new polymer electrolyte composition based on alkali metal salt with lipophilic anions having higher ionic conductivities due to the highly delocalized negative charge distribution in perfluorinated sulfonylimide anion parts. Furthermore, the high cation conductivity of the electrolyte composition can avoid internal resistivity increase, voltage loss and undesirable reactions on electrode surface in dual-ion electrolyte.

The electrolyte composition of the invention can be made by a highly efficiency process which uses commercially available and low-cost compounds. Additionally, it can be carried out in different solvents that simplify the scaling up at industrial level.

Thus, a first aspect of the present invention refers to an electrolyte composition suitable for an alkali battery, said electrolyte composition comprising:

a) at least one alkali metal salt of formula (I):

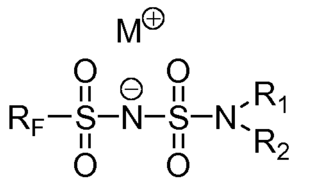

(I)

wherein,

$M^+$ is $Li^+$, $Na^+$ or $K^+$;
$R_F$ is $-C_nF_{2n+1}$, wherein n is an integer selected from 0, 1, 2, 3 and 4;
$R_1$ is a $-C_mH_{2m+1}$ alkyl group and $R_2$ is a $-C_{m'}H_{2m'+1}$ alkyl group, wherein m and m' are integers so that $36 \geq m + m' \geq 5$;
and

b) an electrochemical solvent, wherein the electrochemical solvent is any liquid, solid or gel compound capable of storing and transporting ions, so long as the compound is substantially electrochemically and chemically unreactive with respect to the anode and the cathode, and the compound facilitates the transport of ions between the anode and the cathode.

A second aspect of the invention relates to a method for preparing an electrolyte composition as defined above, said method comprises:

a) providing at least an alkali metal salt of formula (I);
b) providing an electrochemical solvent; and
c) mixing the at least one alkali metal salt of formula (I) with the electrochemical solvent; or
alternatively, dissolving the at least one alkali metal salt of formula (I) with the electrochemical solvent, in a common volatile solvent which is subsequently evaporated.

A further aspect of the present invention refers to an alkali battery comprising an electrolyte composition as

defined above.

## BRIEF DESCRIPTION OF THE FIGURE

Figure 1. Li-ion conductivities of polymer electrolytes at 70°C (LiTFSI: comparative; LiC6TFM: according to the invention). "Total" refers to the ionic conductivity of the mixture of the Li-salt with PEO, as the sum of that of lithium cations and that of the corresponding anions, whereas Li-ion refers to the ionic conductivity due to lithium cations only.

## DETAILED DESCRIPTION OF THE INVENTION

As mentioned above, the first aspect of the present invention refers to an electrolyte composition suitable for an alkali battery, said electrolyte composition comprising:

a) at least one alkali metal salt of formula (I):

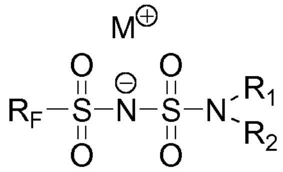

(I)

wherein,

$M^+$ is $Li^+$, $Na^+$ or $K^+$;
$R_F$ is $-C_nF_{2n+1}$, wherein n is an integer selected from 0, 1, 2, 3 and 4;
$R_1$ is a $-C_mH_{2m+1}$ alkyl group and $R_2$ is a $-C_{m'}H_{2m'+1}$ alkyl group, wherein m and m' are integers so that $36 \geq m + m' \geq 5$;
and

b) an electrochemical solvent, wherein the electrochemical solvent is any liquid, solid or gel compound capable of storing and transporting ions, so long as the compound is substantially electrochemically and chemically unreactive with respect to the anode and the cathode, and the compound facilitates the transport of ions between the anode and the cathode.

The electrolyte composition of the invention having lipophilic cations derived from the alkali metal salts of formula (I) provides overall an increased ionic conductivity, as well as an improved charge/discharge cyclability of ion batteries, when compared to other electrolyte compositions having conventional alkali metal salts. Particularly, the polymer electrolyte composition of the present invention can easily reach high cation transference number, higher than 0.5.

In a preferred embodiment, in the alkali metal salt of formula (I) $R_F$ is $CF_3$, i.e., integer n is 1.

In another preferred embodiment, in the alkali metal salt of formula (I) $R_1$ is a $-C_mH_{2m+1}$ alkyl group and $R_2$ is a $-C_{m'}H_{2m'+1}$ alkyl group, wherein m and m' are independently integers from 3 to 10, more particularly from 5 to 8, even more preferably m and m' are 6. In another preferred embodiment, m + m' ranges from 6 to 20, preferably from 6 to 16, more preferably from 6 to 12, and most preferably m = m' = 6.

In another preferred embodiment, in the alkali metal salt of formula (I) cation $M^+$ is $Li^+$. Even in another preferred embodiment, in the metal salt of formula (I), $R_F$ is $CF_3$; $M^+$ is $Li^+$; $R_1$ is a $-C_mH_{2m+1}$ alkyl group and $R_2$ is a $-C_{m'}H_{2m'+1}$ alkyl group, wherein m and m' are integers so that $36 \geq m + m' \geq 5$, preferably m + m' ranges from 6 to 20, preferably from 6 to 16, more preferably from 6 to 12, and most preferably m = m' = 6.

In a most preferred embodiment, the alkali salt of formula (I) is:

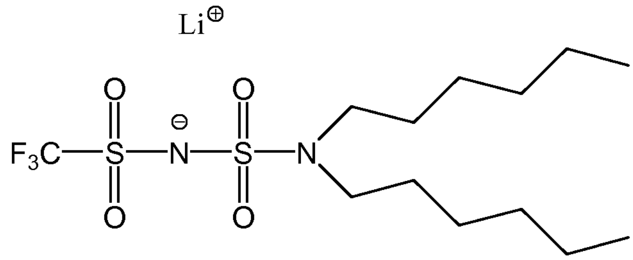

hereinafter referred to as $LiC_6TFM$.

As mentioned above, the alkali metal salt of formula (I) is used in the electrolyte composition of the invention in combination with an electrochemical solvent.

The electrolyte composition of the invention comprises at least one alkali metal salt of formula (I) and an electrochemical solvent.

In the context of the present invention by "electrochemical solvent" is understood a compound which can improve the dielectric constant, the conductivity, especially a lower temperature, contribute to the building a favorable interfacial protective film at the interface (known to the man skilled in the art as "SEI", solid electrolyte interface).

The electrochemical solvent can be any liquid, solid or gel compound capable of storing and transporting ions, so long as the compound is substantially electrochemically and chemically unreactive with respect to the anode and the cathode, and the compound facilitates the transport of ions between the anode and the cathode.

The electrochemical solvents include, but are not limited to, organic solvents comprising a liquid organic solvent, a gel organic solvent and a solid organic solvent; or ionic compounds having an organic cation and an inorganic anion such as ionic liquids. The addition of polymers results in the formation of gels or viscous solution which have advantages in terms of processing in thin films and increasing the overall safety of the battery.

In a preferred embodiment, the electrochemical solvent is a solid organic solvent, more particularly an ion conductive polymer. Non-limiting examples of said ion conductive polymers are, polyethylene oxide derivatives, polypropylene oxide derivatives, polytetrahydrofurane (polyTHF) derivatives, poly vinylidene fluoride, and polymers including ionic dissociative groups. A combination comprising at least one of the foregoing may also be used.

More preferably, the ion conductive polymer is an ion conductive polymer having alkylene oxide-based segment.

The phrase "ion conductive polymer having an alkylene oxide-based segment" as used herein refers to an ion conductive polymer having an alkylene oxide chain structural unit in which alkylene groups and ether oxygen groups are alternately arranged.

The alkylene oxide chain structural unit may be included in a main chain of the ion conductive polymer, or may be included, in a grafted form, in the ion conductive polymer. For example, the alkylene oxide chain structural unit may be an alkylene oxide chain structural unit having 8 to 500.000 carbon atoms, for example, 40 to 250.000 carbon atoms. In some embodiments, the alkylene oxide chain structural unit may be branched or have a comb structure.

The ion conductive polymer may include a siloxane-based polymer or an acrylate-based polymer, a poly(alkene-alt-maleic anhydride) polymer to which is attached the alkylene oxide-based polymer. The ion conductive polymer may comprise at least one selected from an alkylene oxide-based polymer blend, a siloxane-based polymer blend, and an acrylate-based polymer blend a poly(alkene-alt-maleic anhydride) polymer.

In a particular embodiment, the ion conductive polymer may be at least one selected from polyethylene oxide (PEO), polypropylene oxide (PPO), polybutylene oxide (PBO), a PEO-PPO blend, a PEO-PBO blend, a PEO-PPO-PBO blend, a PEO-PPO block copolymer, a PEO-PBO block copolymer, a PEO-PPO-PBO block copolymer, a PBO-PEO-PBO block copolymer, a PEO-PBO-PEO block copolymer, PEO-grafted polymethyl methacrylate (PMMA), PPO-grafted PMMA, and PBO-grafted PMMA, a PEO/PPO-grafted poly(alkene-alt-maleic anhydride) polymer.

More particularly, the ion conductive polymer may be at least one selected from PEO, PPO, a PEO/PPO-grafted poly(alkene-alt-maleic anhydride) polymer a PEO-PPO blend, a PEO-PPO block copolymer, and a PEO-PPO-PEO block copolymer, a polystyrene-PEO block polymer.

The ion conductive polymer may have a weight average molecular weight ($M_w$) of from about 100,000 Daltons to about 7,000,000 Daltons. The weight average molecular weight ($M_w$) of the ion conductive polymer may be, for example, from about 200,000 Daltons to about 7,000,000 Daltons, for example, from about 300,000 Daltons to about 5,000,000 Daltons. The ion conductive polymer having the weight average molecular weight ($M_w$) within the ranges described above has an appropriate chain length, i.e., an appropriate degree of polymerization and thus may have enhanced ionic conductivity at room temperature. However, the weight average molecular weight ($M_w$) of the ion conductive polymer is not particularly limited to the above ranges and may be within any range that enhances the ionic conductivity of the electrolyte composition or represents gains in the mechanical properties.

In another preferred embodiment, the electrochemical solvent is an organic solvent comprising a liquid organic

solvent. Examples of these electrochemical solvents include, but are not limited to, families such as cyclic carbonates, ethers, esters, nitriles, amides, sulfones, sulfonamides.

In a preferred embodiment of the invention the electrochemical solvent is selected from ethylene carbonate (EC), propylene carbonate (PC), dimethyl sulfone (DMS), $CH_3O(CH_2CH_2O)_nCH_3$ with $1 \leq n \leq 5$, ethyl-methyl-sulfone (EMS), tetramethylene sulfone (TMS), succinonitrile, adiponitrile, glutaronitrile, N-methyloxazolidinone, a tetraalkyl sulfonamide of formula $R^SR^6NSO_2NR^5R^6$ where $R^5$ and $R^6$ are methyl or ethyl, tetramethylurea, 1,3-Dimethyl-2-imidazolidinone (DMEU), 1,3-Dimethyl-3,4,5,6-tetrahydro-2(1H)-pyrimidinone (DMPU) and mixtures thereof.

In another particular embodiment, the electrolyte composition of the invention comprises at least one alkali metal salt of formula (I) and an electrochemical solvent.

The alkali metal salt of formula (I) and the electrochemical solvent can be any of those mentioned herein above.

A second aspect of the present invention refers to a process for preparing an electrolyte composition as defined above, said method comprises:

a) providing at least an alkali metal salt of formula (I);
b) providing an electrochemical solvent; and
c) mixing the at least one alkali metal salt of formula (I) with the electrochemical solvent, or alternatively, dissolving the at least one alkali metal salt of formula (I) with the electrochemical solvent, in a common volatile solvent which is subsequently evaporated.

In a particular embodiment, the at least one alkali metal salt of formula (I) and the electrochemical solvent are physically mixed by simply putting the components in contact, optionally under stirring with/or warming of the mixture.

Alternatively, the at least one alkali metal salt of formula (I), and the electrochemical solvents are dissolved in a common volatile solvent which is subsequently evaporated.

Examples of volatile solvents include, but are not limited to, water, methanol, ethanol, isopropanol, acetone, methyl-ethyl-ketone, acetonitrile, ethyl acetate, methyl- or ethylformate, dichloromethane. The man skilled in the art will be able to choose the solvent or the mixture of solvents according to the best properties required in the end product.

The alkali metal salts of formula (I) can be prepared with high efficiency by two synthetic methods (from now onwards Methods A and B).

Method A is a two-step process comprising:

a) reacting a compound of formula (II):

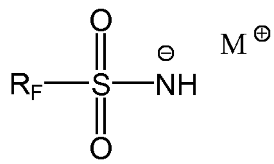

(II)

wherein:

$R_F$ is $-C_nF_{2n+1}$, wherein n is an integer selected from 0, 1, 2, 3 and 4; and
$M^+$ is $Li^+$, $Na^+$ or $K^+$.
with a sulfuryl chloride, optionally in the presence of a Lewis base, to give a sulfonamide compound of formula (III):

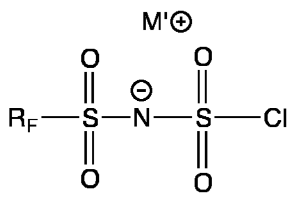

(III)

where $M'^+ = H^+$, Li+, $Na^+$, $K^+$, a protonated organic base.

b) reacting the sulfonimide of formula (III) obtained in step (a) with a compound of formula $HNR_1R_2$ in a non-aqueous solvent,

wherein $R_1$ is a $-C_mH_{2m+1}$ alkyl group and $R_2$ a is $-C_{m'}H_{2m'+1}$ alkyl group,
wherein m and m' are integers so that $36 \geq m + m' \geq 5$;
to give an alkali salt of formula (I).

In a preferred embodiment, in the compound of formula (II) $R_F$ is $CF_3$.
In another preferred embodiment, in the compound of formula (II) $M^+$ is $Li^+$.
Even in another preferred embodiment, in the compound of formula $HNR_1R_2$, $R_1$ is a - $C_mH_{2m+1}$ alkyl group and $R_2$ is a $-C_{m'}H_{2m'+1}$ alkyl group, wherein m + m' ranges from 6 to 20, preferably from 6 to 16, more preferably from 6 to 12, and most preferably m = m' = 6. In another preferred embodiment, in the compound of formula $HNR_1R_2$, $R_1$ is a $-C_mH_{2m+1}$ alkyl group and $R_2$ is a $-C_{m'}H_{2m'+1}$ alkyl group, wherein m and m' are independently integers from 3 to 10, more particularly from 5 to 8, even more preferably m and m' are 6.
In another preferred embodiment, the Lewis base used in step (a) of Method A is triethylamine or pyridine.
Examples of non-aqueous solvents to be used in step (b) of Method A include acetonitrile, γ-butyrolactone (GBL), a cyclic carbonate (such as propylene carbonate (PC), ethylene carbonate (EC), and butylene carbonate), *N*-methyl-2-pyrrolidone (NMP), *N*,*N*-dimethylformamide (DMF), N,N-dimethylacetamide (DMA), dimethylsulfoxide (DMSO), dimethyl sulfone (DMSO), sulfolane, chlorobenzene, cyclopentanone, tetrahydrofuran, 1,4-dioxane, methanol, ethanol, ethylene glycol, diethylene glycol, triethylene glycol, tetraethylene glycol, their mono or di-methyl ethers, 1,2 propylene glycol,1,3 propylene glycol and mixtures thereof. In a preferred embodiment, the non-aqueous solvent is acetonitrile, *N*,*N*-dimethylformamide, dimethylsulfoxide or hexane.
Alternatively, the alkali metal salts of formula (I) can be prepared by Method B. Said method comprises:

a) reacting a compound of formula (IV):

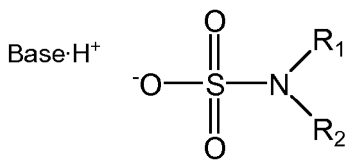

(IV)

wherein:

$R_1$ is a $-C_mH_{2m+1}$ alkyl group and $R_2$ is a $-C_{m'}H_{2m'+1}$ alkyl group, wherein m and m' are integers so that $36 \geq m + m' \geq 5$;

with a chlorinating agent or a fluorinating agent to give a sulfonamide compound of formula (V):

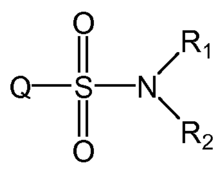

(III-2)

wherein Q is Cl or F and $R_1$ and $R_2$ are as defined for compound of formula (V);

b) reacting the compound of formula (V) with a compound of formula (II) as defined above in the presence of a Lewis base to give a compound of formula (I).

In a preferred embodiment, in the compounds of formula (IV) and (V), $R_1$ is a $-C_mH_{2m+1}$ alkyl group and $R_2$ is a $-C_{m'}H_{2m'+1}$ alkyl group, wherein m + m' ranges from 6 to 20 , preferably from 6 to 16, more preferably from 6 to 12, and most preferably m = m' = 6. In another preferred embodiment, m and m' are independently integers from 3 to 10,

more particularly from 5 to 8, even more preferably m and m' are 6.

In another preferred embodiment, in the compound of formula (V), Q is Cl.

In a preferred embodiment, in the compound of formula (IV) $R_F$ is $CF_3$.

In another preferred embodiment, in the compound of formula (IV) $M^+$ is $Li^+$.

Suitable fluorinated and chlorinating agents to be reacted with compounds of formula (IV) in step (a) of Method B are chlorinated amines, chlorinated sulfonamides, chlorinated iso-cyanurates, chlorinated ketones, chlorinated esters, oxalyl chlorides, fluorinated amines, fluorinated sulfonamides, fluorinated iso-cyanurates, fluorinated ketones, oxalyl fluoride and the like. Preferably, the chlorinated agent is selected from $SO_2Cl$, ClC(O)C(O)Cl and $(CCl_3)_2CO$, $CCl_3OCOCl$.

In another preferred embodiment, the Lewis base used in step (b) of Method B is triethylamine or pyridine.

Compounds of formula (IV) can be straightforwardly prepared by the sulfonation of $HNR_1R_2$ with $SO_3$ in the presence of a Lewis base, such as triethylamine or pyridine.

In another particular embodiment, the alkali metal salt of formula (I) to electrochemical solvent molar ratio varies from 1:1 to 1:20, more preferably from 1:1 to 1:10.

The electrolyte composition of the invention has characteristics, such as those mentioned above, that make it suitable for use in energy storage devices, more particularly in alkali batteries.

Therefore, another aspect of the present invention refers to an energy storage device comprising an electrolyte composition as defined above.

The term "energy storage device" encompasses any device that stores or holds electrical energy, and includes a battery, a supercapacitor or an asymmetric (hybrid) battery-supercapacitor. More particularly, the energy storage device is an alkali battery. The term battery also encompasses single cells.

Actually, a further aspect of the invention refers to an alkali metal battery comprising: a) an electrolyte composition as defined above; b) at least a negative electrode; and c) at least a positive electrode.

Preferably, the alkali metal battery is a lithium or sodium battery. More preferably the lithium battery is a secondary lithium battery and the sodium battery is a secondary sodium battery.

Lithium batteries encompass both lithium-ion batteries and lithium metal batteries, whereas sodium batteries encompass both sodium-ion batteries and sodium metal batteries.

Secondary lithium or sodium batteries are lithium or sodium batteries which are rechargeable. The combination of the electrolyte and the negative electrode of such batteries must be such as to enable both plating/alloying (or intercalation) of lithium or sodium onto the electrode (i.e. charging) and stripping/dealloying (or de-intercalation) of lithium or sodium from the electrode (i.e. discharging).

Even more preferably, the lithium battery is a secondary lithium battery.

More particularly, the battery comprises: a) an electrolyte composition comprising a.1) at least an alkali metal salt of formula (I) as defined above, and a.2) an electrochemical solvent as defined above; b) at least a negative electrode; and c) at least a positive electrode.

It should be pointed out that the terms anode and cathode as commonly used in battery literature can be confusing and misleading, particularly in connection with rechargeable/secondary batteries and this is the reason to include the terms negative electrode and positive electrode in the composition of the battery of the invention as they confer a more correct designation.

The negative electrode corresponds to what is usually called the anode, and the positive electrode corresponds to what is usually called cathode. Accurately speaking, the negative electrode is only an anode (the electrode at which an oxidation reaction is taking place) during the discharge process. During recharge, the negative electrode operates as a cathode (the electrode at which a reduction reaction is taking place). Correspondingly, the positive electrode operates as a cathode during discharge only. During recharge, the positive electrode operates as an anode. Thus, as used throughout this application, the terms negative and positive electrodes are employed and are to be read consistent with the terminology of this paragraph.

Furthermore, the battery of the invention can include a metal foil current collector to conduct current to and from the positive and negative electrodes.

In a particular embodiment, the invention refers to a lithium battery comprising: a) an electrolyte composition as defined above and; b) at least a negative electrode; and c) at least a positive electrode. More preferably, the lithium battery is a secondary/rechargeable lithium battery.

More particularly, the lithium battery comprises: a) an electrolyte composition comprising a.1) at least an alkali salt of formula (I) as defined above wherein cation $M^+$ is Li+, and a.2) an electrochemical solvent as defined above; b) at least a negative electrode; and c) at least a positive electrode.

In this particular embodiment it is preferred that in the alkali salt of formula (I) $R_F$ is $CF_3$; and $R_1$ is a $-C_mH_{2m+1}$ alkyl group and $R_2$ is a $-C_{m'}H_{2m'+1}$ alkyl group, wherein m and m' ranges from 6 to 20, preferably from 6 to 16, more preferably from 6 to 12, even more preferably m and m'are 6.

In a most preferred embodiment, the alkali salt of formula (I) is:

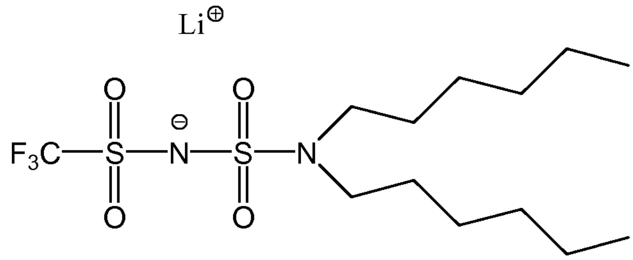

The electrochemical solvent is preferably selected from ethylene carbonate (EC), propylene carbonate (PC), dimethyl carbonate (DMC), diethyl carbonate (DEC), ethyl-methyl-carbonate (EMC), di-methyl ethers of ethylene glycol, diethylene glycol, triethylene glycol, tetraethylene glycol, dimethyl sulfone (DMS), ethyl-methyl-sulfone (EMS), tetramethylene sulfone (TMS), succinonitrile, adiponitrile, glutaronitrile, N-methyloxazolidinone, a tetraalkyl sulfonamide of formula $R^SR^6NSO_2NR^5R^6$ where $R^5$ and $R^6$ are methyl or ethyl, and mixtures thereof.

The negative electrode of the lithium battery of the invention usually comprises a metal substrate and a negative electrode material.

The metal substrate may also have the role of current collector in the battery. The metal substrate may be any suitable metal or alloy, and may for instance be formed from one or more of the metals Ti, Al, W, Cu or Ni, stainless steel or carbon paper.

The negative electrode material can be graphite, natural or artificial, non-graphitic carbon; lithium metal; a lithium alloy forming material, or a lithium intercalation material. Lithium can be reduced onto/into any of these materials electrochemically in the device.

In a preferred embodiment, the negative electrode material is selected from graphite, natural or artificial, pure or admixed with non-graphitic carbon; and a lithium intercalation material. More preferably, the negative electrode material is selected from graphite, natural or artificial, pure or admixed with non-graphitic carbon; lithium terephtalate, $Li_{1+x}VO_2$ ($0 \leq x \leq 1$), $Li_4Ti_5O_{12}$, $Li_{3+x}FeN_2$ ($-1 \leq x \leq 1$), $Li_{5+x}TiN_3$ ($0 \leq x \leq 1$), the three-phase mixture $2(1-z)LiH + (1-z)Mg + zMgH_2$ ($0 < z \leq 1$).

The negative electrode material may be formed either in situ or as a native film. The term "native film" is well understood in the art, and refers to a surface film that is formed on the electrode surface upon exposure to a controlled environment prior to contacting the electrolyte. The exact identity of the film will depend on the conditions under which it is formed, and the term encompasses these variations. In the particular case of using graphite as negative electrode material, it is formed as a native film. The negative electrode material may alternatively be formed in situ, by reaction of the negative electrode surface with the electrolyte. However, the use of a native film is preferred.

The positive electrode should be made from a material suitable for providing high energy density while not compromising the safety now increased by the electrolyte composition of the invention. The positive electrode may be formed from any typical lithium intercalation material, such as transition metal oxides and their lithium compounds.

In a particular embodiment, the positive electrode material is selected from layered lithium oxides $Li_xTMO_2$ (TM = Co, Ni, Mn); spinels $Li_xMnO_4$, where in both cases a fraction of less than 15% of the transition elements (TM, Mn) can be replaced by Al, Mg or Li; lithium phosphates $Li_xM''PO_4$ (M" = Fe, Mn), where a fraction of less than 10% of the transition element (M") can be replaced by Mg; lithium fluoro phosphates $Li_{1+x}FePO_4F$ or $Li_xFePO_3F_2$; lithium fluoro sulfate $Li_xFeSO_4F$; where in all cases $0 \leq x \leq 1$, and mixtures thereof. More preferably, the positive electrode material is selected from $Li_xM''PO_4$ and $Li_xFeSO_4F$.

As known in the art, transition metal oxide composite material can be mixed with a binder such as a polymeric binder, and any conductive additives before being applied to or formed into a current collector of appropriate shape.

In another particular embodiment, the invention refers to a sodium battery comprising: a) an electrolyte composition as defined above and; b) at least a negative electrode; and c) at least a positive electrode. More preferably, the sodium battery is a secondary/rechargeable sodium battery.

More particularly, the sodium battery comprises: a) an electrolyte composition comprising a.1) at least an alkali metal salt of formula (I) wherein cation $M^+$ is $Na^+$, and a.2) an electrochemical solvent; b) at least a negative electrode; and c) at least a positive electrode.

In this particular embodiment it is preferred that in the alkali salt of formula (I) $R_F$ is $CF_3$; $R_1$ is a $-C_mH_{2m+1}$ alkyl group and $R_2$ is a $-C_{m'}H_{2m'+1}$ alkyl group, wherein m and m' ranges from 6 to 20, preferably from 6 to 16, more preferably from 6 to 12, even more preferably m and m' are 6.

In a most preferred embodiment, the alkali salt of formula (I) is:

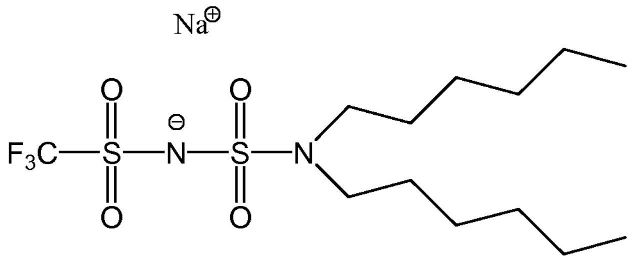

The co-solvent is preferably selected from ethylene carbonate (EC), propylene carbonate (PC), dimethyl sulfone (DMS), ethyl-methyl-sulfone (EMS), tetramethylene sulfone (TMS), $CH_3O(CH_2CH_2O)_nCH_3$ with $1 \leq n \leq 5$, succinonitrile, adiponitrile, glutaronitrile, *N*-methyloxazolidinone, a tetraalkyl sulfonamide of formula $R^SR^6NSO_2NR^5R^6$ where $R^5$ and $R^6$ are methyl or ethyl, tetramethylurea, 1,3-dimethyl-2-imidazolidinone (DMEU), 1,3-dimethyl-3,4,5,6-tetrahydro-2(1H)-pyrimidinone (DMPU) and mixtures thereof.

The negative electrode of the sodium battery of the invention usually comprises a metal substrate and a negative electrode material.

The metal substrate may also have the role of current collector in the battery. The metal substrate may be any suitable metal or alloy, and may for instance be formed from one or more of the metals Ti, Al, W, Cu, Ni or stainless steel. These metals can be used as foils obtained from lamination or deposited onto a plastic substrate by evaporation sputtering or chemical vapour deposition.

The negative electrode material can be graphite, natural or artificial, pure or admixed with non-graphitic carbon; non-graphitic carbon; sodium metal; a sodium alloy forming material, or a sodium intercalation material. Sodium can be reduced onto/into any of these materials electrochemically in the device.

In a preferred embodiment, the negative electrode material is selected from graphite, natural or artificial, pure or admixed with non-graphitic carbon; non-graphitic carbon; and a sodium intercalation material. More preferably, the negative electrode material is selected from natural or artificial graphite, hard carbon.

In another preferred embodiment, the negative electrode of the battery comprises, as the main component, solid metallic sodium or an alloy comprising solid metallic sodium. The content of sodium in the anode is higher than 50 mass %.

The negative electrode may further comprise additives which include an oxygen scavenger. Suitable metal oxygen scavengers include one or more of manganese, vanadium, zirconium, aluminum or titanium.

The negative electrode material may be formed either in situ or as a native film. The term "native film" is well understood in the art, and refers to a surface film that is formed on the electrode surface upon exposure to a controlled environment prior to contacting the electrolyte. The exact identity of the film will depend on the conditions under which it is formed, and the term encompasses these variations. In the particular case of using graphite as negative electrode material, it is formed as a native film. The negative electrode material may alternatively be formed in situ, by reaction of the negative electrode surface with the electrolyte. However, the use of a native film is preferred.

The positive electrode should be made from a material suitable for providing high energy density while not compromising the safety now increased by the electrolyte composition of the invention. The positive electrode may be formed from any typical sodium intercalation material, such as transition metal oxides and their sodium compounds.

In a particular embodiment, the positive electrode material is selected from $Na_xFe_{1-y}Mn_yPO_4$ of the olivine structure ($0 \leq x, y \leq 1$), $Na_xMn_{1-y}Cr_yO_2$, $NaFePO_4F$, $Na_xFePO_3F_2$, $Na_zFe_{0.5}Mn_{0.5}O_2$ ($0 \leq x, y \leq 1$; $0.1 \leq z \leq 1$), and mixtures thereof.

As known in the art, transition metal oxide composite material can be mixed with a binder such as a polymeric binder, and any conductive additives before being applied to or formed into a current collector of appropriate shape.

The invention also relates to a method of making a battery comprising: a) providing an electrolyte composition as defined above; b) providing a positive electrode; c) providing a negative electrode; d) providing a cell housing; and e) assembling the electrolyte composition, the positive electrode and the negative electrode into the cell housing.

This cell housing includes electrode terminals which are extended from the inside to the outside of the cell housing. The negative electrode current collector is in electrical communication with the negative electrode, and the positive electrode current collector is in electrical communication with the positive electrode. Suitable materials for the negative electrode current collector may include aluminum, tungsten, titanium, nickel, copper, molybdenum, and combinations of two or more thereof. Other suitable materials for the negative electrode current collector may include carbon. The positive electrode current collector may be a wire, paddle or mesh formed from aluminum, nickel, copper, carbon or titanium. The current collector may be plated or clad.

Cells of the present invention may be made in a variety of sizes and configurations in any suitable fashion which are known to those skilled in the art. These battery design configurations include, but are not limited to, planar,

prismatic, jelly roll, w-fold, stacked and the like. Batteries may be of any size or shape and may comprise one or more cells according to the invention which may be encased in a rigid casing.

The metal batteries of the invention can be used as an energy storage device, being rechargeable over a plurality of charge-discharge cycles. The energy storage device can be employed in a variety of applications, and the plurality of cycles for recharge is dependent on factors such as, charge and discharge current, depth of discharge, cell voltage limits, and the like.

The present invention will now be described in further detail with reference to the following non-limiting examples.

## Examples

Example 1. Preparation of an electrolyte composition

The solid polymer electrolyte comprising lithium (trifluoromethansulfonyl)(*N*-dihexylsulfonyl)imide (LiC6TFM) and PEO was prepared by solvent casting method. In a typical example, 200 mg PEO were dissolved in 10 mL acetonitrile, and then 91 mg of LiC6TFM corresponding to an ethylene oxide (EO)/Li+ molar ratio of 20/1 (i.e., salt concentration) were added. The resulting viscous solution was poured onto Teflon plate and allowed to stand at room temperature for evaporating the solvent slowly for 12 h. Afterwards, the polymer electrolyte membranes with a controlled thickness (10 to 300 μm) were obtained by hot-pressing the as-obtained Li salt/PEO mixture. Finally, the prepared membranes were dried at 60 °C for 24 hours under vacuum (6 mPa) prior to use.

For comparative purposes, the polymer electrolyte comprising the conventional lithium salt, lithium bis(trifluoromethane)sulfonimide (LiTFSI) and poly(ethylene oxide) was prepared by exactly following the procedures as described above, and the same EO/$Li^+$ of 20/1 was used.

Example 2. Measurements of ionic conductivities

The measurements of total ionic conductivity were carried out on a VMP3 potentiostat (Biologic) by the complex impedance method. The polymer electrolytes comprising lithium salt (either $LiC_6TFM$ or LiTFSI) and poly(ethylene oxide) (PEO) were sandwiched between a pair of stainless steel blocking electrodes. Before measurement, the sandwiched cell was heated to 80 °C for 4 h for obtaining good contact, and then was allowed to stand for 24 h at room temperature (20-25 °C). Afterwards, the measurements were carried out between 30 to 90 °C at an interval of 10 °C for the first heating scan. At each temperature of measurement, the cells were allowed to equilibrate for at least 1 h for good contact. The ac impedance spectra were recorded in the frequency range from 1 to $10^6$ Hz. The ionic conductivity ($\sigma$, in S $cm^{-1}$) was derived from the value of resistance (R, in Siemens) of the bulk electrolyte obtained in the complex impedance diagram, according to the equation: $\sigma = L/(RS)$, where $L$ (cm) is the thickness of membrane of the polymer electrolyte, and $S$ ($cm^2$) is the area of the membrane.

The Li-ion conductivity is the product of total ionic conductivity and Li-ion transference number. The Li-ion transference number ($T_{Li^+}$) of the polymer electrolyte at 70 °C was measured by a combination measurement of AC impedance and DC polarization using a symmetric Li | polymer electrolytes | Li cell, as described by Bruce et al. (Polymer 1987, 28, 2324-2328) The cell was assembled in a glove box ($H_2O$ and $O_2$ < 0.1 ppm). The temperature of the cell was controlled by using a electro thermostatic oven (Lan technics, Model DHG). The cell was firstly heated to 70 °C during 24 h for obtaining a good contact between the electrolyte and electrodes. Then, the cell at 70 °C was applied to a DC voltage ($\Delta V$, 10 mV in this study) until a steady current was obtained (usually 2-3 hours). The initial ($I^0$) and steady ($I^s$) currents (μA) were measured. The impedance spectra of the cell were recorded in the frequency range from $10^{-2}$ to $10^6$ Hz with an oscillation voltage of 10 mV, before and after the DC polarization, to obtain the initial ($R_b{}^0$) and final ($R_b{}^s$) resistances (Ω) of the electrolyte, and the initial ($R_1{}^0$) and final ($R_1{}^s$) resistances (Ω) of interfacial layers of the Li metal electrode/electrolyte. Based on these values for the parameters above, the Li-ion transference number ($T_{Li^+}$) was then calculated by Equation 1:

$$T_{Li^+} = \frac{I^s R_b{}^s [\Delta V - I^0 R_1{}^0]}{I^0 R_b{}^0 [\Delta V - I^s R_1{}^s]} \quad \text{Equation 1}$$

The total ionic conductivity and Li-ion conductivity results are shown in Figure 1.

As can be seen, the total ionic conductivities of the combination lipophilic salt/ PEO are slightly lower than that of LiTFSI/PEO electrolyte. However, as clearly shown in Figure 1, the Li-ion conductivity of the lipophilic salt-based one outperforms the conventional polymer electrolytes. A high Li-ion conductivity is extremely important and beneficial for improving the rate capability and cycling stability of Li-ion batteries as reported by Bouchet, R et al. [Nature Materials,

2013, 12, 452-457]. Therefore, the higher Li-ion conductivity shown by the lipophilic salts used in the invention does effectively enhance the rate capability and cycle life of Li-ion batteries.

## Claims

**1.** An electrolyte composition suitable for an alkali battery, said electrolyte composition comprising:

a) at least one alkali metal salt of formula (I):

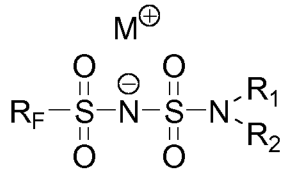

(I)

wherein,

$M^+$ is $Li^+$, $Na^+$ or $K^+$;
$R_F$ is $-C_nF_{2n+1}$, wherein n is an integer selected from 0, 1, 2, 3 and 4;
$R_1$ is a $-C_mH_{2m+1}$ alkyl group and $R_2$ is a $-Cm'H_{2m'+1}$, wherein m and m' are integers so that $36 \geq m + m' \geq 5$; and

b) an electrochemical solvent, wherein the electrochemical solvent is any liquid, solid or gel compound capable of storing and transporting ions, so long as the compound is substantially electrochemically and chemically unreactive with respect to the anode and the cathode, and the compound facilitates the transport of ions between the anode and the cathode.

**2.** The electrolyte composition according to claim 1, wherein in the compounds of formula (I) $R_F$ is $CF_3$.

**3.** The electrolyte composition according to any preceding claims, wherein in the compounds of formula (I) $R_1$ is a $-C_mH_{2m+1}$ alkyl group and $R_2$ is a $-C_{m'}H_{2m'+1}$ alkyl group, wherein m + m' ranges from 6 to 20.

**4.** The electrolyte composition according to any preceding claims, wherein cation $M^+$ in the alkali metal salt of formula (I) is Li+.

**5.** The electrolyte composition according to any of the preceding claims, wherein the alkali metal salt of formula (I) is:

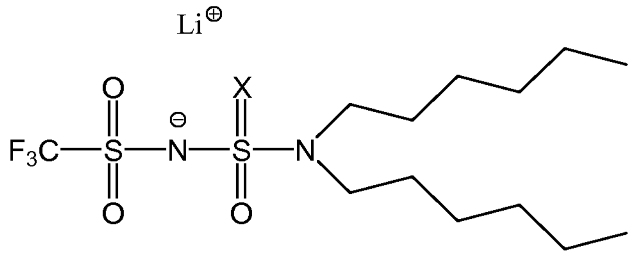

**6.** The electrolyte composition according to any of the preceding claims wherein the electrochemical solvent is an ion conductive polymer having an alkylene oxide-based segment.

**7.** A process for preparing an electrolyte composition as defined in any of claims 1 to 6, said process comprises:

a) providing at least an alkali metal salt of formula (I);
b) providing an electrochemical solvent; and

c) mixing the at least one alkali metal salt of formula (I) with the electrochemical solvent; or alternatively, dissolving the at least one alkali metal salt of formula (I) with the electrochemical solvent in a common volatile solvent which is subsequently evaporated.

**8.** The process according to claim 7, wherein the alkali metal of formula (I) is prepared by a process comprising:

a) reacting a compound of formula (II):

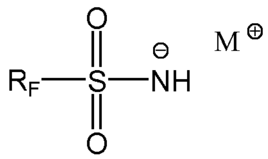

(II)

wherein:

$R_F$ is $-C_nF_{2n+1}$, wherein n is an integer selected from 0, 1, 2, 3 and 4; and
$M^+$ is $Li^+$, $Na^+$ or $K^+$.
with a sulfuryl chloride in the presence of a Lewis base to give a sulfonamide compound of formula (III):

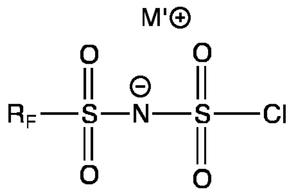

(III)

wherein $R_F$ and $M^+$ are as defined above; and $M'^+ = H^+$, $Li^+$, $Na^+$, $K^+$, a protonated organic base.

b) reacting the sulfonamide of formula (III) obtained in step (a) with a compound of formula $HNR_1R_2$ in a non-aqueous solvent,
wherein $R_1$ is a $-C_mH_{2m+1}$ alkyl group and $R_2$ is a $-C_{m'}H_{2m'+1}$ alkyl group, wherein m and m' are integers so that $36 \geq m + m' \geq 5$.

**9.** The process according to claim 7, wherein the alkali metal of formula (I), is prepared by a process comprising:

a) reacting a compound of formula (IV):

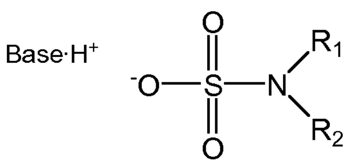

(IV)

wherein:

$R_1$ is a $-C_mH_{2m+1}$ alkyl group and $R_2$ is a $-C_{m'}H_{2m'+1}$ alkyl group, wherein m and m' are integers so that $36 \geq m + m' \geq 5$;
with a chlorinating agent or a fluorinated agent to give a sulfonamide compound of formula (V):

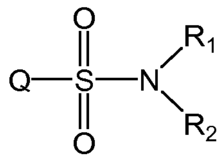

(V)

wherein Q is Cl or F; and

b) reacting the compound of formula (V) with a compound of formula (II) as defined in claim 8 in the presence of a Lewis base.

**10.** An alkali battery comprising an electrolyte composition as defined in any of claims 1 to 6.

**Patentansprüche**

**1.** Elektrolytzusammensetzung, die für eine Alkalibatterie geeignet ist, wobei die Elektrolytzusammensetzung umfasst:

a) wenigstens ein Alkalimetalsalz der Formel (I):

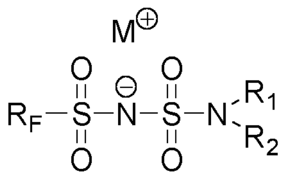

(I)

wobei

$M^+$ $Li^+$, $Na^+$ oder $K^+$ ist;
$R_F$ $-C_nF_{2n+1}$ ist, wobei n eine ganze Zahl ist, ausgewählt aus 0, 1, 2, 3 und 4;
$R_1$ eine $-C_mH_{2m+1}$-Alkylgruppe ist, und R2 $-C_{m'}H_{2m'+1}$ ist, wobei m und m' ganze Zahlen sind, so dass $36 \geq m + m' \geq 5$;
und

b) ein elektrochemisches Lösungsmittel, wobei das elektrochemische Lösungsmittel jegliche flüssige, feste oder Gel-Verbindung ist, die in der Lage ist, Ionen zu speichern und zu transportieren, solange die Verbindung im Wesentlichen elektrochemisch und chemisch nicht-reaktiv in Bezug auf die Anode und die Kathode ist, und wobei die Verbindung den Transport von Ionen zwischen der Anode und der Kathode erleichtert.

**2.** Elektrolytzusammensetzung nach Anspruch 1, wobei in den Verbindungen der Formel (I) $R_F$ $CF_3$ ist.

**3.** Elektrolytzusammensetzung nach einem der vorangehenden Ansprüche, wobei in den Verbindungen der Formel (I) $R_1$ eine $-C_mH_{2m+1}$ Alkylgruppe ist, und $R_2$ eine - $C_{m'}H_{2m'+1}$-Alkylgruppe ist, wobei m + m' von 6 bis 20 reicht.

**4.** Elektrolytzusammensetzung nach einem der vorangehenden Ansprüche, wobei das Kation $M^+$ in dem Alkalimetallsalz der Formel (I) $Li^+$ ist.

**5.** Elektrolytzusammensetzung nach einem der vorangehenden Ansprüche, wobei das Alkalimetallsalz der Formel (I)

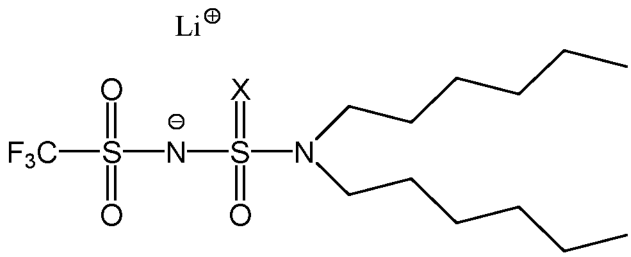

ist.

6. Elektrolytzusammensetzung nach einem der vorangehenden Ansprüche, wobei das elektrochemische Lösungsmittel ein Ionen-leitendendes Polymer mit einem Alkylenoxid-basierenden Segment ist.

7. Verfahren zum Herstellen einer Elektrolytzusammensetzung, wie in einem der Ansprüche 1-6 definiert, wobei das Verfahren umfasst:

a) Bereitstellen von wenigstens einem Alkalimetall der Formel (I);
b) Bereitstellen eines elektrochemischen Lösungsmittels; und
c) Mischen des wenigstens einen Alkalimetallsalzes der Formel (I) mit dem elektrochemischen Lösungsmittel; oder, alternativ, Auflösen des wenigstens einen Alkalimetallsalzes der Formel (I) mit dem elektrochemischen Lösungsmittel in einem gemeinsamen flüchtigen Lösungsmittel, das anschließend verdampft wird.

8. Verfahren nach Anspruch 7, wobei das Alkalimetallsalz der Formel (I) mittels eines Prozesses hergestellt wird, umfassend:

a) Umsetzen einer Verbindung der Formel (II):

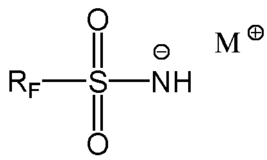

(II)

wobei:

$R_F$ $-C_nF_{2n+1}$ ist, wobei n eine ganze Zahl ist, ausgewählt aus 0, 1, 2, 3 und 4; und $M^+$ $Li^+$, $Na^+$ oder $K^+$ ist; mit einem Sulfurylchlorid in der Anwesenheit einer Lewis-Base, um eine Sulfonamid-Verbindung der Formel (III) zu ergeben:

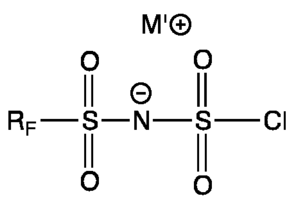

(III)

wobei $R_F$ und $M^+$ wie oben definiert sind; und $M'^+$ = $H^+$, $Li^+$, $Na^+$, $K^+$, eine protonierte organische Base;

b) Umsetzen des in Schritt (a) erhaltenen Sulfonamids der Formel (III) mit einer Verbindung der Formel $HNR_1R_2$ in einem nicht-wässrigen Lösungsmittel, wobei $R_1$ eine $-C_mH_{2m+1}$-Alkylgruppe ist, und $R_2$ eine $-C_{m'}H_{2m'+1}$-Alkylgruppe ist, wobei m und m' ganze Zahlen sind, so dass 36 ≥ m + m' ≥ 5.

**9.** Verfahren nach Anspruch 7, wobei das Alkalimetallsalz der Formel (I) hergestellt wird durch ein Verfahren, umfassend:

a) Umsetzen einer Verbindung der Formel (IV):

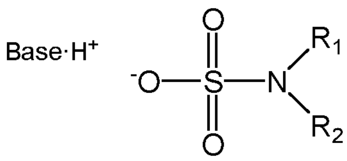

(IV)

wobei:

$R_1$ eine $-C_mH_{2m+1}$-Alkylgruppe ist, und R2 eine $-C_{m'}H_{2m'+1}$-Alkylgruppe ist, wobei m und m' ganze Zahlen sind, so dass 36 ≥ m + m' ≥ 5;
mit einem Chlorierungsmittel oder einem Fluorierungsmittel, um eine Sulfonamidverbindung der Formel (V) zu ergeben:

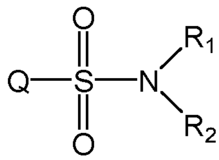

(V)

wobei Q Cl oder F ist; und

b) Umsetzen der Verbindung der Formel (V) mit einer Verbindung der Formel (II), wie in Anspruch 8 definiert, in der Anwesenheit einer Lewis-Base.

**10.** Alkalibatterie, umfassend eine Elektrolytzusammensetzung, wie in einem der Ansprüche 1 bis 6 definiert.

**Revendications**

**1.** Une composition d'électrolyte appropriée pour une pile alcaline, ladite composition d'électrolyte comprenant :

a) au moins un sel d'un métal alcalin de formule (I) :

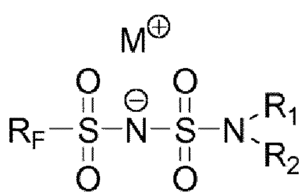

(I)

dans laquelle

$M^+$ est $Li^+$, $Na^+$ ou $K^+$ ;
$R_F$ est $-C_nF_{2n+1}$, dans lequel n est un entier choisi parmi 0, 1, 2, 3 et 4 ;
$R_1$ est un groupe alkyle $-C_mH_{2m+1}$ et $R_2$ est un $-C_{m'}H_{2m'+1}$, m et m' étant des entiers tels que $36 \geq m + m' \geq 5$ ; et

b) un solvant électrochimique, le solvant électrochimique étant tout composé liquide, solide ou gélifié apte à stocker et à transporter des ions, tant que le composé est sensiblement électrochimiquement et chimiquement non réactif par rapport à l'anode et à la cathode, et le composé facilite le transport d'ions entre l'anode et la cathode.

**2.** La composition électrolytique selon la revendication 1, dans laquelle dans les composés de formule (I) $R_F$ est $CF_3$.

**3.** La composition électrolytique selon l'une quelconque des revendications précédentes, dans laquelle dans les composés de formule (I) $R_1$ est un groupe alkyle $-C_mH_{2m+1}$ et $R_2$ est un groupe alkyle $-C_mH_{2m'+1}$, m + m' allant de 6 à 20.

**4.** La composition d'électrolyte selon l'une quelconque des revendications précédentes, dans laquelle le cation $M^+$ dans le sel de métal alcalin de formule (I) est $Li^+$.

**5.** La composition d'électrolyte selon l'une quelconque des revendications précédentes, dans laquelle le sel de métal alcalin de formule (I) est :

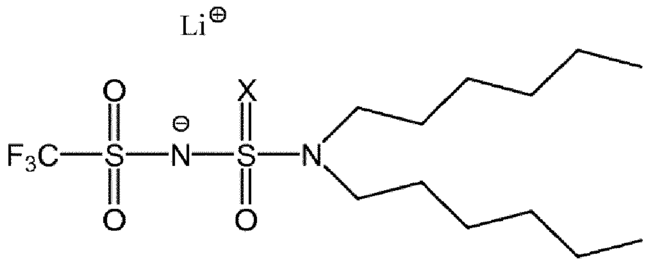

**6.** La composition électrolytique selon l'une quelconque des revendications précédentes, dans laquelle le solvant électrochimique est un polymère conducteur d'ions ayant un segment à base d'oxyde d'alkylène.

**7.** Un procédé de préparation d'une composition électrolytique telle que définie dans l'une quelconque des revendications 1 à 6, ledit procédé comprenant :

a) le fait de fournir au moins un sel de métal alcalin de formule (I) ;
b) le fait de fournir un solvant électrochimique ; et
c) le fait de mélanger ledit au moins un sel de métal alcalin de formule (I) avec le solvant électrochimique ; ou en variante, le fait de dissoudre ledit au moins un sel de métal alcalin de formule (I) avec le solvant électrochimique dans un solvant volatil commun qui est ensuite évaporé.

**8.** Le procédé selon la revendication 7, dans lequel le métal alcalin de formule (I) est préparé par un procédé comprenant :

a) le fait de faire réagir un composé de formule (II) :

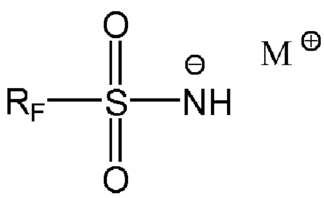

(II)

dans laquelle :

$R_F$ est $-C_nF_{2n+1}$, n étant un entier choisi parmi 0, 1, 2, 3 et 4 ; et
$M^+$ est $Li^+$, $Na^+$ ou $K^+$.
avec un chlorure de sulfuryle en présence d'une base de Lewis pour donner un composé sulfonamide de formule (III) :

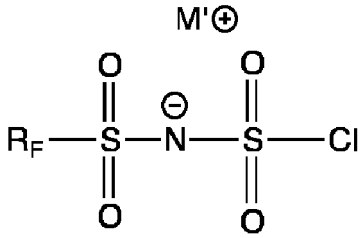

(III)

dans laquelle $R_F$ et $M^+$ sont tels que définis plus haut ; et $M'^+ = H^+$, $Li^+$, $Na^+$, $K^+$, une base organique protonée.

b) le fait de faire réagir le sulfonamide de formule (III) obtenu à l'étape (a) avec un composé de formule $HNR_1R_2$ dans un solvant non aqueux, $R_1$ étant un groupe alkyle $-C_mH_{2m+1}$ et $R_2$ étant un groupe alkyle $-Cm'H_{2m'+1}$, m et m' étant des entiers tels que $36 \geq m + m' \geq 5$.

**9.** Le procédé selon la revendication 7, dans lequel le métal alcalin de formule (I), est préparé par un procédé comprenant :

a) le fait de faire réagir un composé de formule (IV) :

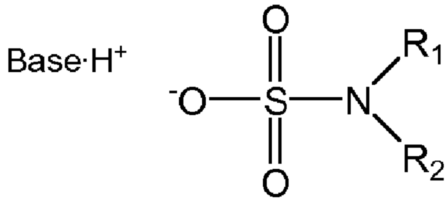

(IV)

dans laquelle :

$R_1$ est un groupe alkyle $-C_mH_{2m+1}$ et $R_2$ étant un groupe
alkyle $-Cm'H_{2m'+1}$, m et m' étant des entiers tels que $36 \geq m + m' \geq 5$ ; avec un agent de chloration ou un agent fluoré pour donner un composé sulfonamide de formule (V) :

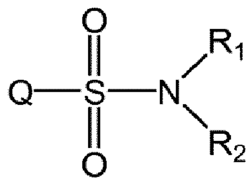

(V)

dans laquelle Q est Cl ou F ; et

b) le fait de faire réagir le composé de formule (V) avec un composé de formule (II) tel que défini à la revendication 8 en présence d'une base de Lewis.

**10.** Une pile alcaline comprenant une composition électrolytique telle que définie dans l'une quelconque des revendications 1 à 6.

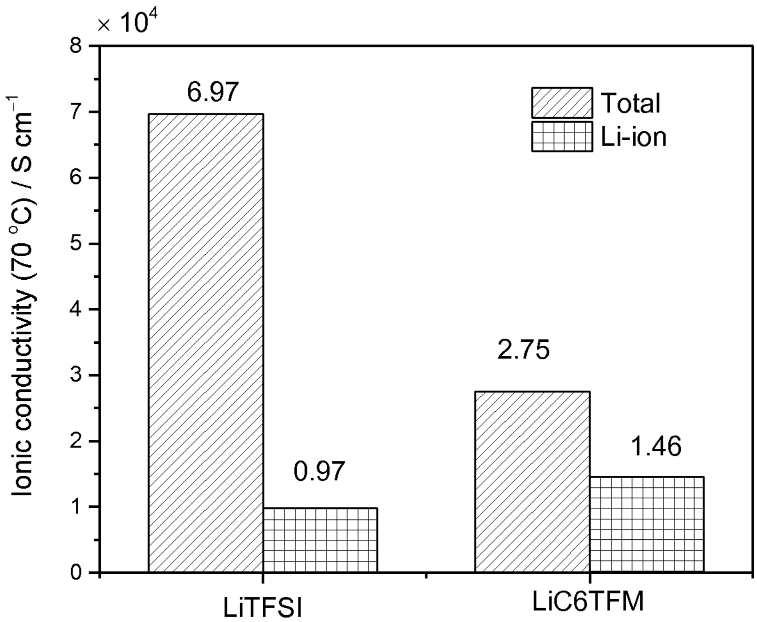
× 10⁴
Ionic conductivity (70 °C) / S cm⁻¹
6.97
0.97
2.75
1.46
Total
Li-ion
LiTFSI
LiC6TFM

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5548055 A


### Non-patent literature cited in the description


- *Electrochemica Acta,* 2014, vol. 133, 529-538
- *Electrochimica Acta,* 1995, vol. 40, 2191
- *Energy & Environmental Science,* 2014, vol. 7, 513-537
- **BOUCHET R. et al.** *Nature Materials,* 2013, vol. 12, 452
- **ZHANG, H. et al.** *Chem. Soc. Rev.,* 2017, vol. 46, 797-815
- **BRUCE et al.** *Polymer,* 1987, vol. 28, 2324-2328
- **BOUCHET, R et al.** *Nature Materials,* 2013, vol. 12, 452-457